(19) Europäisches Patentamt
European Patent Office
Office européen des brevets

(11) **EP 3 495 645 A1**

(12) **DEMANDE DE BREVET EUROPEEN**

(43) Date de publication:
**12.06.2019 Bulletin 2019/24**

(51) Int Cl.:
***F02D 35/02*** *(2006.01)*          *F02P 5/152* *(2006.01)*
***F02P 17/12*** *(2006.01)*

(21) Numéro de dépôt: **18206396.6**

(22) Date de dépôt: **15.11.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **06.12.2017 FR 1761708**

(71) Demandeur: **IFP Energies nouvelles**
**92852 Rueil-Malmaison Cedex (FR)**

(72) Inventeurs:
• **JEAN, Maxime**
**92160 Antony (FR)**
• **LEROY, Thomas**
**78100 Saint Germain en Laye (FR)**
• **VIDAL-NAQUET, Fabien**
**75015 Paris (FR)**

(74) Mandataire: **IFP Energies nouvelles**
**Département Propriété Industrielle**
**Rond Point de l'échangeur de Solaize**
**BP3**
**69360 Solaize (FR)**

(54) **PROCEDE DE COMMANDE D'UN MOTEUR A COMBUSTION INTERNE A ALLUMAGE COMMANDE AU MOYEN D'UN ESTIMATEUR DE CLIQUETIS**

(57) La présente invention concerne un procédé de commande d'un moteur à combustion interne à allumage commandé, dans lequel on commande (COM) l'avance à l'allumage au moyen d'une estimation (EST) de la distribution des mesures de cliquetis (MES). Cette estimation (EST) permet de déterminer, pour ces mesures (MES), un intervalle de confiance ($q_{min}$, $q_{max}$) d'un quantile prédéterminé de la distribution des mesures de cliquetis (MES).

EP 3 495 645 A1

**EP 3 495 645 A1**

## Description

La présente invention concerne le domaine de la commande de la combustion d'un moteur à combustion interne à allumage commandé, dans le but de réduire le phénomène de cliquetis.

Ce type de moteur comprend au moins un cylindre comportant une chambre de combustion délimitée par la paroi latérale interne du cylindre, par le haut du piston qui coulisse dans ce cylindre et par la culasse. Généralement, un mélange carburé est renfermé dans cette chambre de combustion et subit une étape de compression puis une étape de combustion sous l'effet d'un allumage commandé, par une bougie, ces étapes étant regroupées sous le vocable de « phase de combustion » dans la suite de la description.

Dans un moteur à explosion, la combustion du mélange air/essence commence normalement après l'étincelle. Le front de flamme se propage et son souffle repousse une partie du mélange contre les parois du cylindre et le sommet du piston. L'élévation de pression et de température est parfois suffisamment importante pour que le mélange non brûlé coincé contre les parois atteigne son point d'auto-allumage et s'auto-enflamme en un ou plusieurs endroits. Ce phénomène est appelé « cliquetis ». Ainsi le cliquetis est avant tout un phénomène de combustion anormale dans les moteurs à allumage commandé, perceptible extérieurement par un bruit métallique venant du moteur qui résulte de l'apparition d'ondes de pression dans la chambre de combustion.

Ces explosions parasites produisent des vibrations dans le domaine acoustique et au-delà (de l'ordre de 5 à 50 KHz). Elles sont très vives et peuvent rapidement conduire à un échauffement localisé. L'accumulation de cliquetis endommage le métal du piston et/ou des parois du cylindre et les segments. Au bout de quelque temps (selon l'intensité) cela conduit à la destruction du piston, des segments ou des parois du cylindre.

L'estimation du cliquetis permet un contrôle de la combustion limitant l'effet du cliquetis et n'endommageant pas le cylindre.

## État de la technique

On connaît des méthodes pour estimer le cliquetis d'un moteur à combustion interne. Elles sont classiquement basées sur l'enregistrement de signaux issus d'un capteur de pression cylindre ou d'un accéléromètre. Une première méthode consiste à appliquer hors ligne, c'est à dire en traitement ultérieur, une technique de transformations de Fourier à ces signaux pour estimer le cliquetis. Une telle méthode est décrite dans les documents suivants :

- "Application of the Reallocated Smoothed Pseudo Wigner-Ville Distribution to Knock Detection", Olivier BOUBAL et Jacques OKSMAN, Traitement du Signal volume 15, 1998

- "Knock measurement for fuel evaluation in spark ignition engines", C. Hudson, X. Gao, R. Stone, Fuel volume 80 (2001)

Une seconde méthode consiste à appliquer aux signaux une technique de filtrage et de détections de maximum pour estimer le cliquetis hors ligne. Une telle méthode est décrite dans le document suivant :

- "Modeling of In-cylinder Pressure Oscillations under Knocking Conditions: Introduction to Pressure Envelope Curve", G. Brecq et O. Le Corre, SAE 2005

En outre, on connaît une autre méthode, également basée sur l'enregistrement de signaux issus d'un capteur de pression cylindre. Cette fois, une technique d'ondelettes est appliquée aux signaux pour estimer le cliquetis hors ligne. Une telle méthode est décrite dans le document suivant :

- "Knocking detection using wavelet instantaneous correlation method", Z. Zhang et , E. Tomita, Journal of SAE Review volume 23 (2002)

Cependant, ces méthodes ne permettent pas une estimation de l'intensité du cliquetis en temps réel (le calcul doit se faire typiquement en moins de 50 $\mu$s pour être embarqué sur un calculateur).

On connaît par la demande FR 2 949 511 une méthode pour estimer en temps réel l'intensité de cliquetis, à partir d'un signal vibratoire. Selon cette méthode, on détermine en temps réel les coefficients de la décomposition de Fourier de ce signal, on en déduit l'énergie contenue dans le signal en sommant les carrés de ces coefficients de la décomposition de Fourier. Enfin, on estime l'intensité de cliquetis en déterminant un paramètre corrélé à l'intensité de cliquetis égal à la racine carrée du maximum de l'énergie.

Il a été également envisagé d'utiliser d'autres capteurs comme par exemple une sonde d'ionisation.

Concernant la mesure du cliquetis, on obtient de manière générale un nombre scalaire qui reflète l'intensité du phénomène qui a eu lieu au cours d'un cycle. L'indicateur, quelconque, est appelé ici KI (de l'anglais « knock indicator », ce que l'on pourra traduire par indicateur cliquetis). La variabilité des mesures successives de KI, indépendamment de tout bruit de mesure, est importante au regard des variations de leur moyenne temporelle sur des échelles de temps caractéristiques de l'évolution d'état moteur. La distribution des mesures KI, et non des mesures considérées individuellement, contient l'information renseignant sur la propension du moteur à voir apparaitre des cycles cliquetants. Il pourrait être envisagé d'utiliser la moyenne des valeurs de KI. Toutefois, la caractérisation de cette distribution par sa seule moyenne est insuffisante pour prévenir l'occurrence de forts KI, susceptibles d'endommager le moteur. En effet, l'expérience a montré que la dispersion des mesures n'est pas liée à leur moyenne. Un contrôleur pilotant correctement le KI moyen sur une cible ne contrôle pas la probabilité d'occurrence des fortes valeurs de la distribution, ce qui ne permet pas un contrôle sûr du cliquetis.

Pour pallier ces inconvénients, la présente invention concerne un procédé de commande d'un moteur à combustion interne à allumage commandé, dans lequel on commande l'avance à l'allumage au moyen d'une estimation de la distribution des mesures de cliquetis KI. Cette estimation permet de déterminer, pour ces mesures, un intervalle de confiance d'un quantile prédéterminé de la distribution des KI. Ainsi, il est possible de commander, en temps réel, le moteur à combustion interne de manière à assurer une proportion donnée de cycles considérés à risque, tout en ayant un nombre de mesures limité. De plus, l'estimation, de préférence bayésienne, permet la réalisation de calculs légers (simples opérations scalaires), nécessitant peu de temps de calcul, peu de mémoire et des ressources matérielles moindres. En outre, le procédé selon l'invention maximise l'efficacité énergétique moyenne du moteur grâce au pilotage fin du niveau de cliquetis.

## Le procédé selon l'invention

L'invention concerne un procédé de commande d'un moteur à combustion interne à allumage commandé, ledit moteur à combustion interne comprenant un capteur de cliquetis agencé sur ledit moteur à combustion interne. Ledit procédé comporte les étapes suivantes :

> a) on réalise N mesures de cliquetis au moyen dudit capteur de cliquetis ;
> b) on construit un estimateur d'une distribution desdites N mesures, ledit estimateur déterminant un intervalle de confiance d'un quantile prédéterminé au moyen desdites N mesures ;
> c) on commande l'allumage au sein dudit moteur à combustion interne en fonction d'une comparaison avec ledit intervalle de confiance :
>
>> i) si ledit seuil de cliquetis est inférieur à la valeur minimale dudit intervalle de confiance dudit quantile prédéterminé, alors on diminue l'avance à l'allumage ;
>> ii) si ledit seuil de cliquetis est supérieur à la valeur maximale dudit intervalle de confiance dudit quantile prédéterminé, alors on augmente l'avance à l'allumage ; et
>> iii) si ledit seuil de cliquetis est compris dans ledit intervalle de confiance, alors on ne modifie pas l'avance à l'allumage.

Selon un mode de réalisation, ledit estimateur est un estimateur bayésien.

Conformément à une mise en oeuvre, ladite distribution est une distribution pouvant être rapportée à une distribution normale par une méthode mathématique, de préférence ladite distribution est une distribution log-normale.

Selon un aspect, ledit estimateur détermine en outre l'espérance q dudit quantile prédéterminé.

Avantageusement, on diminue ou on augmente l'avance à l'allumage de manière proportionnelle à la différence entre ladite espérance dudit quantile prédéterminé et ledit seuil de cliquetis.

Selon une mise en oeuvre, N est compris entre 5 et 20, de préférence entre 7 et 15.

Conformément à un mode de réalisation, ledit intervalle de confiance contient la valeur du quantile réel dans exactement 98% des cas.

De manière avantageuse, ledit capteur de cliquetis est un accéléromètre agencé sur la culasse dudit moteur à combustion interne.

De préférence, ladite mesure de cliquetis est le maximum d'amplitude du signal filtré dudit accéléromètre.

Selon un mode de réalisation de l'invention, ledit seuil de cliquetis est obtenu par essais au banc moteur durant la phase de calibration du moteur.

Conformément à un aspect, ledit quantile prédéterminé de ladite distribution est supérieur ou égal à 80%.

De plus, l'invention concerne un système de commande d'un moteur à combustion interne à allumage commandé comprenant des moyens pour mettre en oeuvre le procédé selon l'une des caractéristiques précédentes.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des caractéristiques précédentes, lorsque ledit programme est exécuté sur un ordinateur.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les étapes du procédé selon un mode de réalisation de l'invention.
La figure 2 illustre une distribution des mesures de cliquetis.
Les figures 3 à 5 illustrent l'étape de comparaison selon les trois cas de figure : le seuil est compris dans l'intervalle de confiance, le seuil est supérieur à l'intervalle de confiance, et le seuil est inférieur à l'intervalle de confiance.
Les figures 6a et 6b représentent respectivement l'avance à l'allumage et la mesure de cliquetis entourée par l'estimation de son intervalle de confiance obtenu en régime stabilisé avec le procédé de commande selon un mode de réalisation de l'invention.

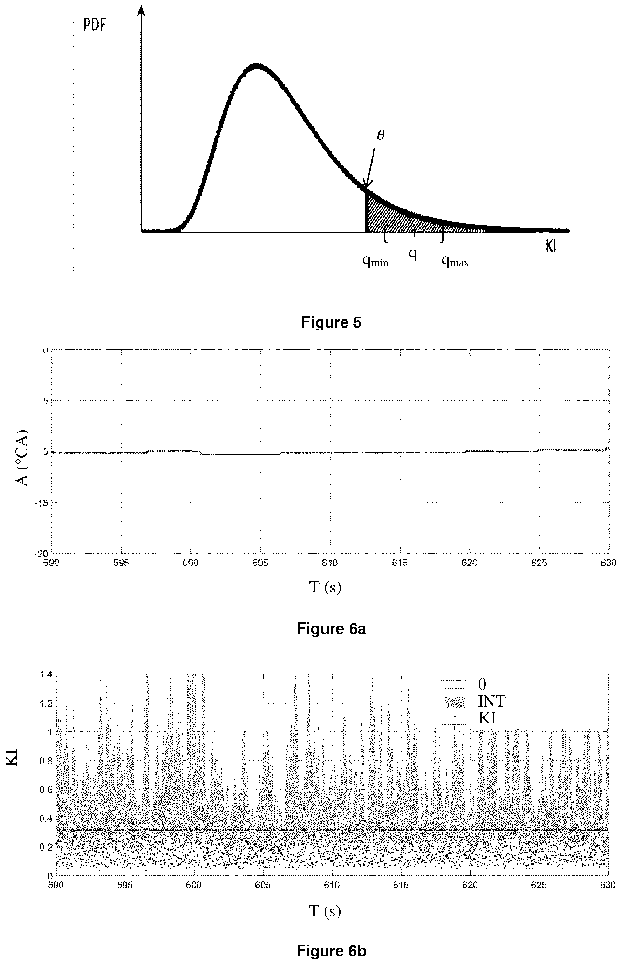

Les figures 6a et 6b représentent respectivement l'avance à l'allumage et la mesure de cliquetis obtenu en régime stabilisé avec un procédé de commande selon l'art antérieur.

**Description détaillée de l'invention**

Le procédé selon l'invention concerne un procédé de commande de la combustion d'un moteur à combustion interne prenant en compte les phénomènes de cliquetis. Le procédé comporte la comparaison de valeurs obtenues par un estimateur (espérance d'un quantile prédéterminé et intervalle de confiance) à un seuil de cliquetis, les valeurs stochastiques étant déterminées à partir d'un traitement d'un signal issu d'un capteur de cliquetis, ce signal ayant un sens physique pour qualifier directement la combustion et l'éventuelle apparition de cliquetis. Le procédé est indépendant de la nature de la combustion, de la technologie du capteur utilisé et de l'indicateur KI.
Ce type de moteur comprend au moins un cylindre comportant une chambre de combustion délimitée par la paroi latérale interne du cylindre, par le haut du piston qui coulisse dans ce cylindre et par la culasse. Généralement, un mélange carburé est renfermé dans cette chambre de combustion et subit une étape de compression puis une étape de combustion sous l'effet d'un allumage commandé, au moins par une bougie.
Le capteur de cliquetis utilisé pour le procédé de commande selon l'invention, peut-être de tout type, par exemple un accéléromètre ou un capteur de pression.
Selon un mode de réalisation de l'invention, le capteur de cliquetis est un accéléromètre agencé sur la culasse du moteur à combustion interne.
Le procédé selon l'invention comporte les étapes suivantes :

1) Mesures de cliquetis

2) Construction d'un estimateur

3) Comparaison avec un seuil

4) Commande de l'allumage au sein du moteur à combustion interne

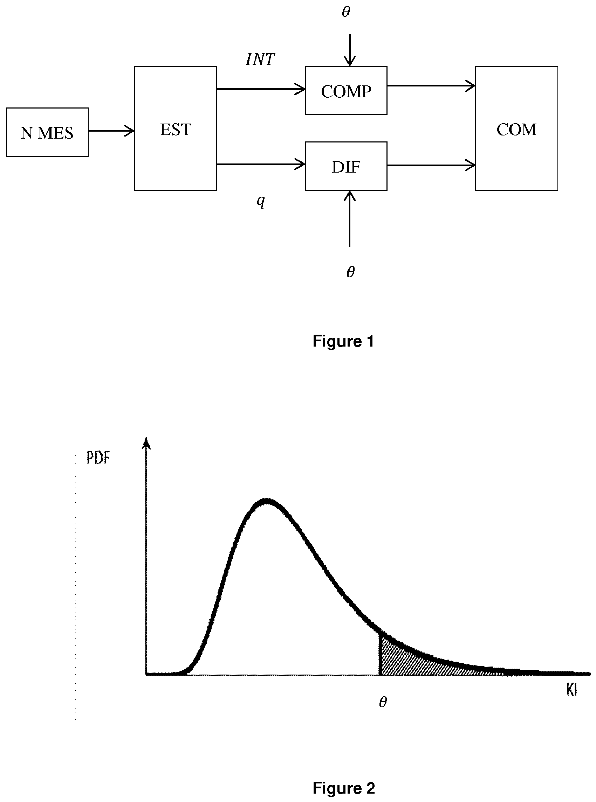

La figure 1 illustre, schématiquement et de manière non limitative, les étapes du procédé selon un mode de réalisation de l'invention. Le procédé comporte une étape de réalisation de N mesures (N MES) au moyen du capteur de cliquetis, une étape de construction d'un estimateur (EST) qui détermine une espérance q (de manière optionnelle) et un intervalle de confiance INT d'un quantile prédéterminé, une étape de comparaison (COMP) avec une valeur seuil $\theta$ et une étape de commande (COM) en temps réel. De manière optionnelle, et tel qu'illustré sur la figure 1, le procédé peut comporter également une étape de détermination de la différence (DIF) entre l'espérance q du quantile prédéterminé et la valeur seuil $\theta$, cette différence peut être prise en compte pour l'étape de commande (COM).
Les différentes étapes du procédé selon l'invention vont être décrites ci-dessous en référence à la figure 1.

1) Mesures de cliquetis (N MES)

Lors de cette étape, on réalise N mesures de cliquetis au moyen du capteur de cliquetis. Chaque mesure est une mesure réalisée pour un cycle de combustion. Ces mesures peuvent être enregistrées dans une mémoire interne. Par conséquent, pour chaque cycle, on connaît les mesures pour les N cycles précédents le cycle en cours.

Pour le mode de réalisation de l'invention pour lequel le capteur de cliquetis est un accéléromètre, la mesure peut consister en le maximum d'amplitude du signal filtré de l'accéléromètre. Cette valeur reflète l'intensité du cliquetis (KI).

Selon un mode de réalisation de l'invention, le nombre N est supérieur ou égal à 5, de préférence compris entre 5 et 20, et de manière préférée entre 7 et 15. En effet, au moins 5 valeurs permettent de construire un estimateur représentatif. De plus, la limite de 20 mesures permet de former un estimateur réactif et permet de limiter la mémoire vive utilisée pour le procédé selon l'invention. Cependant, pour une application ne nécessitant pas un estimateur réactif, le nombre N peut être pris aussi grand que possible.

2) Construction d'un estimateur (EST)

Il s'agit de construire un estimateur qui détermine un intervalle de confiance INT autour de l'espérance d'un quantile prédéterminé au moyen des N mesures réalisées à l'étape précédente. L'estimation de l'intervalle de confiance permet d'obtenir une commande robuste. En outre, l'estimateur peut également déterminer l'espérance du quantile prédéterminée.

Pour cette étape, on considère que les mesures suivent un loi de distribution stochastique. De préférence, la loi stochastique est une distribution pouvant être rapportée à une distribution normale par une méthode mathématique, de préférence ladite distribution est une distribution log-normale.

Pour cette construction, on considère que les mesures de cliquetis suivent une distribution log-normale. Il s'agit d'une hypothèse courante dans la littérature. Le document suivant décrit une telle considération : « Spelina, J. M.; Peyton Jones, J. C. & Frey, J. Characterization of knock intensity distributions: Part 2: parametric models Proceedings of the Institution of Mechanical Engineers, Part D: Journal of Automobile Engineering, Sage Publications Sage UK: London, England, 2013, 227, 1650-1660 ».

En effet, cette distribution est particulièrement adaptée, car le cliquetis est un phénomène exponentiel, pour lequel la distribution correspond sensiblement à une distribution normale en échelle logarithmique. Une telle distribution est déterminée par les deux paramètres suivants : la moyenne et l'écart type. Avec ces valeurs, il est possible de calculer tout quantile de cette distribution.

Selon un aspect de l'invention, le quantile prédéterminé correspond à au moins 80 %. Ce quantile élevé est un bon indicateur de l'état cliquetis, les cycles dangereux correspondant aux valeurs élevées de KI. De préférence, le quantile prédéterminé peut valoir 80%, 95%, 99% ou 99,7%.

Une telle estimation peut être réalisée rapidement avec un nombre limité de mesures, ce qui permet une commande en temps réel, avec une demande en mémoire limitée. De plus, cet estimateur apporte la stabilité au procédé selon l'invention, quel que soit le nombre de mesures.

Selon un mode de réalisation de l'invention, l'estimateur est un estimateur bayésien. Cet estimateur permet de déterminer l'intervalle de confiance de l'estimation du quantile de manière réactive avec un nombre limité de mesures.

Conformément à une mise en oeuvre de l'invention, l'intervalle de confiance contient la valeur du quantile réel dans exactement 98% des cas. En d'autres termes, la valeur du quantile réel est inférieure à l'intervalle de confiance dans 1% des cas et supérieure à l'intervalle de confiance dans 1% des cas.

Un exemple d'estimation bayésienne d'un intervalle de confiance est donné, de manière non limitative, en annexe de la présente demande (à la fin de la description).

3) Comparaison avec un seuil (COMP)

Lors de cette étape, on compare l'espérance et l'intervalle de confiance déterminés à l'étape précédente avec un seuil de cliquetis. En d'autres termes, il s'agit de vérifier si le seuil de cliquetis est dans l'intervalle de confiance.

Le seuil de cliquetis peut être obtenu par essais au banc moteur durant la phase de calibration du moteur.

Les figures 2 à 5, illustrent schématiquement et de manière non limitative, cette étape.

La figure 2 illustre une densité de probabilité de l'intensité du signal du capteur de cliquetis KI. Il s'agit d'une distribution du type log-normale. Sur cette figure est également illustré le seuil de cliquetis $\theta$. La zone hachurée représente la zone pour laquelle le cliquetis est présent.

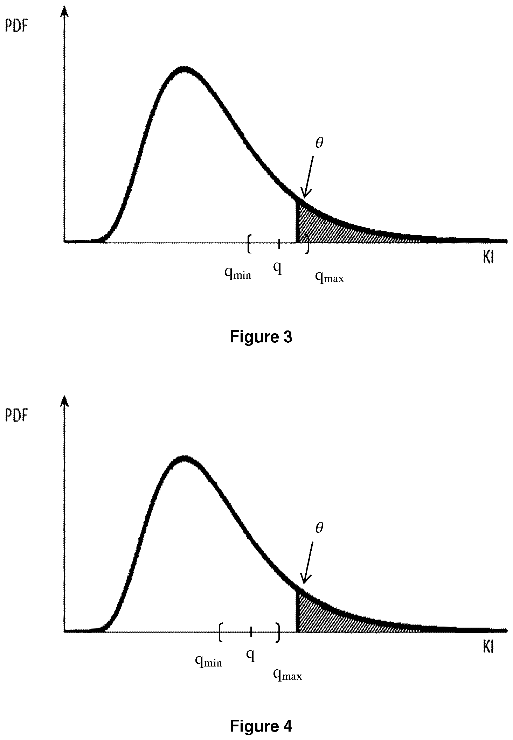

La figure 3 illustre la densité de probabilité de la figure 2, sur laquelle on représente l'espérance q, et l'intervalle de confiance, délimité par sa valeur minimale $q_{min}$ et sa valeur maximale $q_{max}$. L'espérance et l'intervalle de confiance sont obtenus pour le quantile prédéterminé (par exemple 95%) au moyen des N mesures. Pour cet exemple, le seuil de cliquetis $\theta$ est dans l'intervalle de confiance déterminé par l'estimateur bayésien. Cette configuration représente 1% des cas de figure.

La figure 4 illustre la densité de probabilité de la figure 2, sur laquelle on représente l'espérance q, et l'intervalle de confiance, délimité par sa valeur minimale $q_{min}$ et sa valeur maximale $q_{max}$. L'espérance et l'intervalle de confiance sont obtenus pour le quantile prédéterminé (par exemple 95%) au moyen des N mesures. Pour cet exemple, le seuil

de cliquetis $\theta$ est supérieur à l'intervalle de confiance déterminé par l'estimateur bayésien. Cette configuration représente 98% des cas de figure.

La figure 5 illustre la densité de probabilité de la figure 2, sur laquelle on représente l'espérance q, et l'intervalle de confiance, délimité par sa valeur minimale $q_{min}$ et sa valeur maximale $q_{max}$. L'espérance et l'intervalle de confiance sont obtenus pour le quantile prédéterminé (par exemple 95%) au moyen des N mesures. Pour cet exemple, le seuil de cliquetis $\theta$ est inférieur à l'intervalle de confiance déterminé par l'estimateur bayésien. Cette configuration représente 1% des cas de figure.

3') Différence (DIF)

Il s'agit d'une étape optionnelle du procédé selon l'invention.

Lors de cette étape, on détermine la différence entre l'espérance q du quantile prédéterminé déterminé à l'étape précédente et le seuil de cliquetis $\theta$.

La détermination de cette différence permet sa prise en compte dans la commande, pour réaliser une commande adaptée à l'intensité du cliquetis.

4) Commande de l'allumage au sein du moteur (COM)

Lors de cette étape, on commande l'avance à l'allumage dans les cylindres du moteur à combustion interne, en fonction du cliquetis, en prenant en compte la comparaison réalisée à l'étape 3). Selon l'invention, on commande l'avance à l'allumage du cycle suivant. En d'autres termes, avec les mesures des N cycles précédents le cycle n (c'est-à-dire les cycles n-N, n-N+1, ..., n-2, n-1), on commande l'avance à l'allumage du cycle n.

On rappelle que l'avance à l'allumage est un degré de liberté contrôlable qui détermine, en angle vilebrequin, l'angle auquel la combustion est initié. Il s'agit d'un actionneur à action instantanée (immédiatement appliquée au prochain cycle), qui réduit la propension du moteur à cliqueter.

La commande est réalisée de la manière suivante :

i) si le seuil de cliquetis est inférieur à la valeur minimale de l'intervalle de confiance autour de l'espérance du quantile prédéterminé, alors on diminue l'avance à l'allumage (cas de la figure 5) ;

ii) si le seuil de cliquetis est supérieur à la valeur maximale de l'intervalle de confiance autour de l'espérance du quantile prédéterminé, alors on augmente l'avance à l'allumage (cas de la figure 4) ; et

iii) sinon (si ledit seuil de cliquetis est compris dans ledit intervalle de confiance ($q_{min}$, $q_{max}$)) on ne modifie pas l'avance à l'allumage (cas de la figure 3), en d'autres termes on maintient l'avance à l'allumage du cycle précédent.

Ainsi, le procédé selon l'invention permet de ne prendre que des actions correctives pertinentes : la commande de l'allumage n'est modifiée que si l'on est sûr (par exemple à 99%, si l'intervalle de confiance représente 98 % des réalisations de la distribution) que le quantile est en dehors de l'intervalle de confiance. La commande d'avance à l'allumage est par conséquent plus stable, car des changements ne sont imposés qu'un cycle sur cinquante environ en régime stabilisé. La réduction de la dispersion de la commande et de la variation de l'état moteur sur les courtes échelles de temps implique en retour une distribution plus stable des mesures KI, une meilleure estimation de ses paramètres, et donc la possibilité de s'approcher de la limite cliquetis, d'obtenir un meilleur rendement tout en limitant le nombre de cycles cliquetants.

Selon une mise en oeuvre de l'invention, cette commande peut prendre en compte également la différence établie à l'étape 3'). Pour cela, l'augmentation ou la diminution de l'avance à l'allumage (dans les situations i) et ii) décrites ci-dessus) peut être proportionnelle à la différence entre l'espérance q du quantile prédéterminé déterminé à l'étape précédente et le seuil de cliquetis $\theta$. Ainsi, la commande est adaptée à l'intensité du cliquetis.

De plus, l'invention concerne un système de commande d'un moteur de combustion interne à allumage commandé comprenant des moyens pour la mise en oeuvre du procédé selon l'une quelconque des combinaisons de variantes du procédé décrites précédemment.

En particulier, le système de commande peut comprendre :

- un capteur de cliquetis,
- des moyens de traitement du signal du capteur de cliquetis,
- une mémoire pour enregistrer N mesures (signal de cliquetis des N précédents cycles de combustion),
- des moyens de calcul pour construire l'estimateur bayésien et pour réaliser la comparaison, et
- des moyens de commande de l'avance à l'allumage.

Les moyens de traitement du signal, la mémoire, les moyens de calcul, et les moyens de commande peuvent être intégrés au sein d'un calculateur embarqué d'un véhicule.

L'invention concerne également un moteur de combustion interne équipé d'un tel système de commande.

En outre, l'invention concerne un produit programme d'ordinateur téléchargeable depuis un réseau de communication et/ou enregistré sur un support lisible par ordinateur (calculateur embarqué) et/ou exécutable par un processeur. Ce programme comprend des instructions de code de programme pour la mise en oeuvre du procédé tel que décrit ci-dessus, lorsque le programme est exécuté sur un ordinateur.

Exemple comparatif

Les caractéristiques et avantages du procédé selon l'invention apparaîtront plus clairement à la lecture de l'exemple comparatif ci-après.

L'exemple comparatif est basé sur la simulation d'un moteur à combustion interne 1.2 L comprenant trois cylindres à injection directe et à allumage commandé. L'exemple comparatif concerne un régime stabilisé du moteur à combustion interne à 1750 tr/min.

On rappelle que le cliquetis est un phénomène stochastique. Par conséquent, même sous des conditions identiques, chaque test est unique.

Dans le but d'obtenir les intensités de cliquetis correspondant à des conditions réelles d'utilisation, les distributions expérimentales des intensités de cliquetis sont déterminées pour chaque point de fonctionnement, en utilisant tous les cycles précédents.

Dans le cadre de l'exemple comparatif, le procédé selon l'invention est comparé à un procédé selon l'art antérieur, pour lequel l'avance à l'allumage augmente à chaque cycle moteur d'une faible valeur, et décroit fortement si la valeur de cliquetis mesurée excède un seuil prédéterminé. Classiquement, la faible valeur est de 0,01° CA (angle vilebrequin), et la forte décroissance correspond à 3° CA (angle vilebrequin). Cette stratégie assure un temps de réaction rapide pour tous les cycles cliquetants, tout en conservant 99,7% de cycles avec une intensité de cliquetis inférieure à la valeur seuil.

Pour le procédé selon l'invention, on utilise N=10 et le quantile est prédéterminé à 95%.

Les figures 6a et 6b illustrent les résultats obtenus par le procédé selon l'invention. La figure 6a illustre l'avance à l'allumage A en °CA (angle vilebrequin) en fonction du temps T (s), et la figure 6b illustre les valeurs de KI sur la même plage temporelle. Sur la figure 6b, le seuil θ est symbolisé par une droite horizontale, chaque cycle KI est représenté par un point, et l'intervalle de confiance INT associé à chaque point est représenté par un segment de droite vertical. Comme attendu, avec le procédé selon l'invention, l'avance à l'allumage n'est modifiée que lorsque le seuil est en dehors de l'intervalle de confiance. On observe sur la figure 6a que la commande est très stable (peu de variation de l'avance à l'allumage).

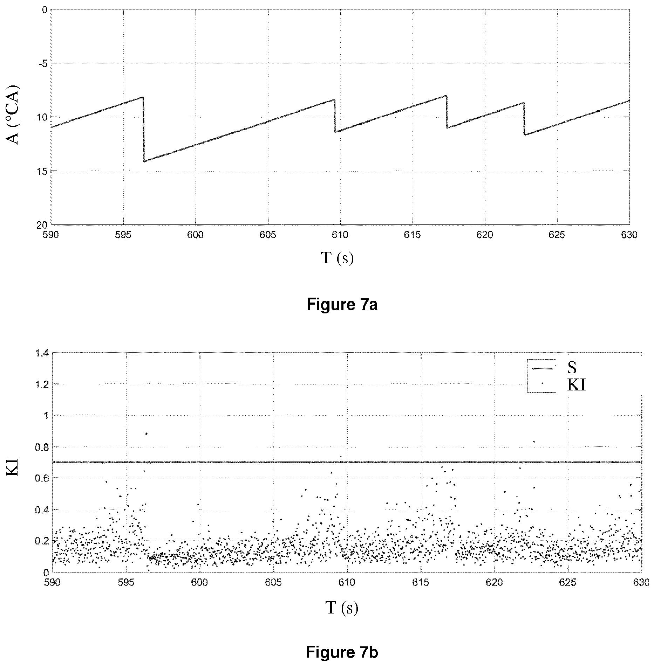

Les figures 7a et 7b illustrent les résultats obtenus par le procédé selon l'art antérieur. La figure 7a illustre l'avance à l'allumage A en °CA (angle vilebrequin) en fonction du temps T (s), et la figure 7b illustre les valeurs de KI sur la même plage temporelle. Sur la figure 7b, le seuil S est symbolisé par une droite horizontale, et chaque cycle KI est représenté par un point. On observe sur la figure 7a que la commande est peu stable avec de nombreuses modifications de l'avance à l'allumage, avec notamment des retraits d'avance brutal et des retours lents vers la zone cliquetante.

Ensuite, ces procédés sont comparés en termes de consommation de carburant. Il ressort de cette comparaison que le procédé selon l'invention permet un gain de 1,1 % en consommation par rapport au procédé selon l'art antérieur.

Des essais identiques ont été menés pour d'autres régimes stabilisés. Pour chaque essai, le procédé selon l'invention permet un gain de consommation par rapport au procédé selon l'art antérieur, ce gain est compris entre 0,6 et 2,2 %.

Le procédé selon l'invention permet donc de limiter le cliquetis, tout en réduisant la consommation du moteur à combustion interne.

**Annexe**

Estimation bayésienne de l'intervalle de confiance du quantile.

Dans un but de simplification, cette annexe concerne l'estimation bayésienne pour une distribution normale. Cette estimation bayésienne peut être adaptée pour toute distribution pouvant être rapportée à une distribution normale, en particulier à une distribution log-normale.

I. MOTIVATIONS

On suppose que l'on dispose de n mesures du phénomène physique étudié, dont les caractéristiques aléatoires ne peuvent être négligées. On admet par ailleurs que ces mesures sont indépendantes et normalement distribuées. On dispose alors de n réalisations qu'on note $X_1,... ,X_n$. Soit q le vrai quantile 95% de cette distribution. La formule de Bayes permet d'exprimer la distribution de la valeur de q, au regard des mesures observées $X_1,... ,X_n$. Naturellement, q peut être estimé sans incertitude lorsque $n \to \infty$. Néanmoins, lorsque n < co (par ex. n = 10), q ne peut plus être estimé avec certitude.

En revanche, le formalisme bayésien nous permet de définir un intervalle qui encadre effectivement q pour 98% des n-uplets possibles de n réalisations $X_1,... ,X_n$ issues de cette même distribution.

## II. ESTIMATION DE L'INTERVALLE DE CONFIANCE DE LA MOYENNE

On présente tout d'abord la méthode qui consiste à déterminer la moyenne $\mu$ de la distribution (et non son quantile 95% q), tout en supposant la variance $\sigma^2$ de la distribution connue. On introduit à cet effet la formule de Bayes :

$$\pi(\mu \mid X_1,\ldots,X_n) = \frac{\overbrace{\pi(X_1,\ldots,X_n \mid \mu)}^{Vraisemblance}\ \overbrace{\pi(\mu)}^{apriori}}{\underbrace{\pi(X_1,\ldots,X_n)}_{facteur\ de\ normalisation}}$$

avec $\pi$ la probabilité et | l'opérateur de conditionnement.

- Le facteur de normalisation ne dépend pas de $\mu$ et se comporte comme une constante.
- La loi a priori reflète les connaissances a priori dont on dispose sur la distribution de $\mu$ (indépendamment des observations qui sont faites consécutivement). Afin d'éviter d'insérer des informations biaisées (à considérer dans ce cadre comme des préjugés), nous utilisons l'a priori non informatif $\pi(\mu) \propto 1$.
- Les réalisations ($X_1,... ,X_n$) étant supposées conditionnellement (sachant $\mu$) indépendantes, nous pouvons factoriser la vraisemblance :

$$\pi(X_1,\ldots,X_n \mid \mu) \propto \prod_{k=1}^{n} \pi(X_k \mid \mu)$$

On connaît alors l'écriture de tous les facteurs de la distribution a posteriori. La conduite du calcul nous amène à

$$\pi(\mu \mid X_1,\ldots,X_n) \propto \exp \frac{\left(\mu - \sum \frac{X_k}{n}\right)^2}{2(\sigma/\sqrt{n})^2}$$

qui n'est autre qu'une loi normale centrée sur la moyenne des $X_k$ et d'écart-type $\frac{\sigma}{\sqrt{n}}$. Il est alors aisé d'obtenir l'intervalle de confiance de $\mu$, à savoir :

moyenne $\pm$ constante x écart-type.

## III. ESTIMATION DE L'INTERVALLE DE CONFIANCE DU QUANTILE

Les données expérimentales nous interdisent d'une part l'hypothèse $\sigma$ = constante et d'autre part l'hypothèse $\sigma$ fonction de $\mu$. On est alors contraint de faire l'estimation en parallèle du couple de paramètres ($\mu$; $\sigma$). La méthodologie comporte 3 différences principales avec la simple estimation de la moyenne :

- La distribution a priori du couple ($\mu$; $\sigma$) doit être judicieusement sélectionnée afin de demeurer non informative et de ne pas engendrer de biais injustifiés au cours de l'estimation. L'a priori $\pi(\mu) \propto 1$ a une forme très naturelle. En revanche, dans le cas multidimensionnel où l'on n'estime non pas seulement $\mu$ mais $(\mu; \sigma)$, la définition de la notion "non-informative" (absence de préjugés) présente une difficulté d'ordre supérieur. Les concepts d'information mutuelle de maximisation d'entropie de l'information ont été mobilisés.

- La distribution a posteriori comporte 4 paramètres, exigeant une étape de renormalisation adaptée afin d'alléger considérablement la puissance de calcul nécessaire (évitant tout calcul intégral).
- La distribution a posteriori de $(\mu; \sigma)$ doit être traitée afin d'obtenir la distribution a posteriori du quantile 95% q. La distribution a posteriori de q n'admet pas de forme analytique simple (sans intégrales) et peut être réalisée en séparant le calcul en deux étapes : un calcul hors ligne coûteux des invariants de la distribution de q et un calcul en ligne léger à chaque cycle.

## Revendications

1. Procédé de commande d'un moteur à combustion interne à allumage commandé, ledit moteur à combustion interne comprenant un capteur de cliquetis agencé sur ledit moteur à combustion interne, **caractérisé en ce que** ledit procédé comporte les étapes suivantes :

   a) on réalise N mesures (MES) de cliquetis au moyen dudit capteur de cliquetis ;
   b) on construit un estimateur (EST) d'une distribution desdites N mesures, ledit estimateur déterminant un intervalle de confiance ($q_{min}$, $q_{max}$) d'un quantile prédéterminé au moyen desdites N mesures ;
   c) on commande (COM) l'allumage au sein dudit moteur à combustion interne en fonction d'une comparaison avec ledit intervalle de confiance ($q_{min}$, $q_{max}$) :

      i) si ledit seuil de cliquetis $\theta$ est inférieur à la valeur minimale $q_{min}$ dudit intervalle de confiance dudit quantile prédéterminé, alors on diminue l'avance à l'allumage ;
      ii) si ledit seuil de cliquetis $\theta$ est supérieur à la valeur maximale $q_{max}$ dudit intervalle de confiance dudit quantile prédéterminé, alors on augmente l'avance à l'allumage ; et
      iii) si ledit seuil de cliquetis $\theta$ est compris dans ledit intervalle de confiance ($q_{min}$, $q_{max}$), alors on ne modifie pas l'avance à l'allumage.

2. Procédé de commande selon la revendication 1, dans lequel ledit estimateur (EST) est un estimateur bayésien.

3. Procédé de commande selon l'une des revendications précédentes, dans lequel ladite distribution est une distribution pouvant être rapportée à une distribution normale par une méthode mathématique, de préférence ladite distribution est une distribution log-normale.

4. Procédé de commande selon l'une des revendications précédentes, dans lequel ledit estimateur détermine en outre l'espérance q dudit quantile prédéterminé.

5. Procédé de commande selon la revendication 4, dans lequel on diminue ou on augmente l'avance à l'allumage de manière proportionnelle à la différence (DIF) entre ladite espérance dudit quantile prédéterminé et ledit seuil de cliquetis.

6. Procédé de commande selon l'une des revendications précédentes, dans lequel N est compris entre 5 et 20, de préférence entre 7 et 15.

7. Procédé de commande selon l'une des revendications précédentes, dans lequel ledit intervalle de confiance contient la valeur du quantile réel dans exactement 98% des cas.

8. Procédé de commande selon l'une des revendications précédentes, dans lequel ledit capteur de cliquetis est un accéléromètre agencé sur la culasse dudit moteur à combustion interne.

9. Procédé de commande selon la revendication 5, dans lequel ladite mesure de cliquetis est le maximum d'amplitude du signal filtré dudit accéléromètre.

10. Procédé de commande selon l'une des revendications précédentes, dans lequel ledit seuil de cliquetis est obtenu par essais au banc moteur durant la phase de calibration du moteur.

**11.** Procédé de commande selon l'une des revendications précédentes, dans lequel ledit quantile prédéterminé de ladite distribution est supérieur ou égal à 80%.

**12.** Système de commande d'un moteur à combustion interne à allumage commandé comprenant des moyens pour mettre en oeuvre le procédé selon l'une des revendications précédentes.

**13.** Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications 1 à 11, lorsque ledit programme est exécuté sur un ordinateur.

$\theta$

*INT*

COMP

N MES

EST

*q*

DIF

COM

$\theta$

**Figure 1**

PDF

KI

$\theta$

**Figure 2**

Figure 3

Figure 4

PDF

$\theta$

$q_{min}$    q    $q_{max}$

KI

**Figure 5**

A (°CA)

T (s)

**Figure 6a**

KI

$\theta$
INT
KI

T (s)

**Figure 6b**

Figure 7a

Figure 7b

Europäisches Patentamt

European Patent Office

Office européen des brevets

# RAPPORT DE RECHERCHE EUROPEENNE

Numéro de la demande

EP 18 20 6396

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2007/016387 A1 (TAKEMURA YUICHI [JP] ET AL) 18 janvier 2007 (2007-01-18) | 1,3,10, 12,13 | INV. F02D35/02 |
| A | * alinéa [0049] - alinéa [0056] * <br> * figures 8-9, 11 * | 2,4-9,11 | ADD. F02P5/152 |
| X | WO 2008/044622 A1 (TOYOTA MOTOR CO LTD [JP]; NIPPON SOKEN [JP]; KANEKO RIHITO [JP]; KASAS) 17 avril 2008 (2008-04-17) | 1,3,12, 13 | F02P17/12 |
| A | * alinéa [0066] - alinéa [0078] * <br> * figures 8-12 * | 2,4-11 | |
| X | WO 2007/032244 A1 (DENSO CORP [JP]; TOYOTA MOTOR CO LTD [JP]; TAKEMURA YUICHI [JP]; KASAS) 22 mars 2007 (2007-03-22) | 1,12,13 | |
| A | * page 2, ligne 17 - page 15, dernière ligne * <br> * figures * | 2-11 | |
| A | US 2006/288982 A1 (KANEKO RIHITO [JP] ET AL) 28 décembre 2006 (2006-12-28) * alinéa [0009] - alinéa [0028] * | 1-13 | |
| | ----- | | DOMAINES TECHNIQUES RECHERCHES (IPC) |
| | | | F02D F02P |

Le présent rapport a été établi pour toutes les revendications

| Lieu de la recherche | Date d'achèvement de la recherche | Examinateur |
|---|---|---|
| Munich | 2 avril 2019 | De Vita, Diego |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 18 20 6396

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-04-2019

| Document brevet cité au rapport de recherche | Date de publication | Membre(s) de la famille de brevet(s) | Date de publication |
|---|---|---|---|
| US 2007016387 A1 | 18-01-2007 | CN 101019013 A | 15-08-2007 |
| | | EP 1938072 A1 | 02-07-2008 |
| | | JP 4459125 B2 | 28-04-2010 |
| | | JP 2007023903 A | 01-02-2007 |
| | | US 2007016387 A1 | 18-01-2007 |
| | | WO 2007010958 A1 | 25-01-2007 |
| WO 2008044622 A1 | 17-04-2008 | CN 101356355 A | 28-01-2009 |
| | | EP 1959122 A1 | 20-08-2008 |
| | | JP 4390792 B2 | 24-12-2009 |
| | | JP 2008088917 A | 17-04-2008 |
| | | US 2008294328 A1 | 27-11-2008 |
| | | WO 2008044622 A1 | 17-04-2008 |
| WO 2007032244 A1 | 22-03-2007 | CN 101111752 A | 23-01-2008 |
| | | EP 1924831 A1 | 28-05-2008 |
| | | JP 4756968 B2 | 24-08-2011 |
| | | JP 2007077969 A | 29-03-2007 |
| | | US 2007067091 A1 | 22-03-2007 |
| | | WO 2007032244 A1 | 22-03-2007 |
| US 2006288982 A1 | 28-12-2006 | DE 102006000313 A1 | 15-02-2007 |
| | | JP 4600181 B2 | 15-12-2010 |
| | | JP 2007009735 A | 18-01-2007 |
| | | US 2006288982 A1 | 28-12-2006 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2949511

**Littérature non-brevet citée dans la description**

- **OLIVIER BOUBAL ; JACQUES OKSMAN,.** Application of the Reallocated Smoothed Pseudo Wigner-Ville Distribution to Knock Detection. *Traitement du Signal,* 1998, vol. 15
- **C. HUDSON ; X. GAO ; R. STONE.** Knock measurement for fuel evaluation in spark ignition engines. *Fuel,* 2001, vol. 80
- **G. BRECQ ; O. LE CORRE.** Modeling of In-cylinder Pressure Oscillations under Knocking Conditions: Introduction to Pressure Envelope Curve. *SAE,* 2005
- **Z. ZHANG ; E. TOMITA.** Knocking detection using wavelet instantaneous correlation method. *Journal of SAE Review,* 2002, vol. 23
- Characterization of knock intensity distributions: Part 2: parametric models Proceedings of the Institution of Mechanical Engineers. **SPELINA, J. M. ; PEYTON JONES, J. C. ; FREY, J.** Journal of Automobile Engineering. Sage Publications, 2013, vol. 227, 1650-1660